# EUROPÄISCHE PATENTSCHRIFT

(11) **EP 3 803 728 B1**
(45) Veröffentlichungstag und Bekanntmachung des Hinweises auf die Patenterteilung: **26.07.2023**
(21) Anmeldenummer: 18730688.1
(22) Anmeldetag: 04.06.2018
(51) Int. Cl.: G06Q 10/06

(54) **VERFAHREN UND SYSTEM ZUM BEREITSTELLEN VON PROZESSPROTOKOLLEN FÜR MASCHINENDATEN**
METHOD AND SYSTEM FOR PROVIDING PROCESS PROTOCOLS FOR MACHINE DATA
PROCÉDÉ ET SYSTÈME POUR FOURNIR DES PROTOCOLES DE PROCESSUS POUR DES DONNÉES DE MACHINE

(43) Veröffentlichungstag der Anmeldung: 14.04.2021
(73) Patentinhaber: Celonis SE, 80333 München (DE)
(72) Erfinder: KLENK, Martin, 80639 München (DE); RINKE, Alexander, 80333 München (DE); NOMINACHER, Bastian, 80539 München (DE)
(74) Vertreter: 2s-ip Schramm Schneider Bertagnoll Patent- und Rechtsanwälte Part mbB
(86) Internationale Anmeldenummer: PCT/EP2018/064664
(87) Internationale Veröffentlichungsnummer: WO 2019/233550

(56) Entgegenhaltungen:
- EP-A1- 3 139 274
- DE-A1-102008 014 633
- DE-A1-102013 112 896
- US-A1- 2016 170 406
- US-A1- 2017 212 937

## Beschreibung

### Gebiet der Erfindung

Die Erfindung betrifft ein Verfahren zum Bereitstellen von Prozessprotokollen zu Prozessen, die von einer Anzahl von physischen Einrichtungen ausgeführt werden, wobei die Prozessprotokolle einem Process Mining System zur Verfügung gestellt werden.

### Hintergrund der Erfindung

Es ist bekannt, Produkte beispielsweise mit einem Barcode zu versehen, der es ermöglicht das Produkt in einer Produktions-/Verarbeitungslinie zu lokalisieren. An vorbestimmten Stellen der Produktions- bzw. Verarbeitungslinie können hierzu Leseeinrichtungen vorgesehen sein, mit denen der Barcode des Produktes ausgelesen werden kann. Beim Auslesen des Barcodes kann die jeweilige Leseeinrichtung den Standort des entsprechenden Produktes signalisieren. Damit lässt sich allerdings nur die Frage beantworten, an welchem Punkt der Produktions- bzw. Verarbeitungslinie sich aktuell welches Produkt befindet. Selbst wenn man diese Daten, d.h. wann welches Produkt sich wo in der Produktions- bzw. Verarbeitungslinie befunden hat, speichert, kann damit ebenfalls nur die Frage beantwortet werden, welches Produkt sich wann wo befunden hat. Darüberhinausgehende Fragestellungen können hiermit jedoch nicht beantwortet werden.

Insbesondere kann nicht ermittelt werden, welcher Verarbeitungs- bzw. Bearbeitungsschritt an welchem Produkt und an welcher Station vorgenommen wurde, da es durchaus denkbar ist, dass eine Verarbeitungsstation gleiche oder gleichartige Produkte unterschiedlich verarbeitet.

Neben diesen genannten Informationen ist es wünschenswert, den gesamten Prozess (z.B. Verarbeitungsprozess) eines Produktes analysieren und visualisieren zu können, um beispielsweise Flaschenhälse oder Fehler in dem Prozess möglichst zeitnah erkennen und entsprechende Maßnahmen einleiten zu können. Dies ist insbesondere dann von Interesse, wenn entlang mehrerer Verarbeitungslinien unterschiedliche Teile eines Endproduktes verarbeitet werden. In diesem Fall kann es sein, dass die einzelnen Teile des Endproduktes entlang ihrer jeweiligen Verarbeitungslinie wie gewünscht verarbeitet werden, das Endprodukt aber dennoch erst mit einer zeitlichen Verzögerung montiert werden kann. Um eine solche Verzögerung einer Endmontage detektieren zu können, müssen sämtliche Verarbeitungsprozesse der einzelnen Teile prozessübergreifend analysiert und visualisiert werden können, um beispielsweise ermitteln zu können, welches Teil oder welche Teile zu der verzögerten Endmontage geführt haben. Mit dieser Information kann dann der gesamte Verarbeitungsprozess neu justiert, beispielsweise die Verarbeitungsprozesse der einzelnen Teile aufeinander abgestimmt werden.

Um beispielsweise einen Flaschenhals in einem Prozess zuverlässig ermitteln zu können, ist es meist erforderlich, eine größere Anzahl von Prozessinstanzen dieses Prozesses zu analysieren, um beispielsweise Ausreißer erkennen zu können, die nicht zwangsläufig zu einer Neujustierung des Prozesses führen müssen.

Darüber hinaus ist es mit den aus dem Stand der Technik bekannten Mitteln nicht möglich, die einzelnen Verarbeitungsstationen, beispielsweise einzelne den Verarbeitungsstationen zugeordnete Maschinen, im Kontext eines Verarbeitungsprozesses eines Produktes zu überwachen. So kann es beispielsweise vorkommen, dass sich die Verarbeitung eines Produktes aufgrund eines Maschinenfehlers verzögert, was beispielsweise zu einer Verzögerung des übergeordneten Produktionsprozesses führen kann.

Aus der US 2016/170406 A1 ist ein Verfahren zur Überwachung von Produktionsanlagen bekannt. Hierzu werden Daten von Arbeitern, Maschinen und Material an Produktionslinien aufgezeichnet und statistisch ausgewertet. Die Datenaufzeichnung erfolgt an Produktionsstationen einer Produktionslinie mittels eines Barcode Scanners, eines RFID-Chips oder einer Sensorschnittstelle. Mittels der Sensorschnittstelle kann ein Maschinenstatus erkannt werden. Mittels eines Barcode- bzw. RFID Scans kann sich ein Arbeiter an der Produktionsstation an- bzw. abmelden und/oder abgeschlossene Arbeitsschritte vermerken. Ein Scan wird mit einem Zeitstempel als Ereignis in einer Datenbank gespeichert. Somit kann aus den gespeicherten Ereignissen ein Bericht erzeugt werden.

Aus der EP 3 139 274 A1 ist ein Verfahren zum Ermitteln einer Netto-Durchlaufzeit zwischen Prozessschritten einer Prozessinstanz bekannt. Durch Ausführen von realen Prozessen werden Prozessdaten erzeugt und als Prozessprotokoll gespeichert. Für jeden Prozessschritt wird eine Zeitangabe gespeichert. Zum Ermitteln der Netto-Durchlaufzeit wird ein Kalender verwendet, in dem Zeitintervalle gespeichert sind, die für das Ermitteln der Netto-Durchlaufzeit zu berücksichtigen sind.

Aus der US 2017/021937 A1 ist ein Verfahren zum erzeugen eines Prozessprotokolls bekannt, wobei ein Prozesssensor vorgesehen wird, der von dem Prozessor eines Computersystems ausgeführt wird und wobei der Prozesssensor angepasst ist Prozessdaten aus Rohdaten abzuleiten, wobei die Prozessdaten zumindest ein Prozesselement und das zumindest eine Prozesselement zumindest einen Prozessschritt umfassen, und aus den abgeleiteten Prozessdaten eindeutige Kennungen für die Prozesselemente und Kennungen und eine Reihenfolge für die Prozessschritte zu erzeugen. Die erzeugten Daten werden als Prozessprotokoll gespeichert.

Aus der DE 10 2013 112 896 A1 ist ein Verfahren zur Analyse von in einer produktionstechnischen Anlage ablaufenden Prozessen bekannt, wobei Messdaten von Zustandsparametern erfasst und in einer Speichereinrichtung gespeichert werden. Die gespeicherten Messdaten werden in eine Rechnereinheit importiert, wo aus den Messdaten virtuelle Kenndaten berechnet werden. Aus den virtuellen Kenndaten werden Kennwerte berechnet, die zur Analyse der Prozesse verwendet werden.

Aus der DE 10 2008 014 633 A1 ist ein Verfahren zum Betreiben eines drahtlosen Sensornetzwerkes mit mehreren Sensorknoten bekannt. Mittels Steuersignale können Sensorknoten von einem Betriebszustand in einen anderen Betriebszustand versetzt werden.

Mit dem aus dem Stand der Technik bekannten Verfahren und Mitteln ist es also nicht möglich, sämtliche Prozesszusammenhänge, einschließlich Sensor- und Maschinendaten, in der Produktion zu visualisieren und zu analysieren.

### Aufgabe der Erfindung

Aufgabe der vorliegen Erfindung ist es daher, Lösungen bereitzustellen, die eine zuverlässige Überwachung der Verarbeitung von Produkten entlang einer Produktions- bzw. Verarbeitungslinie und der die Produkte verarbeitenden Einrichtungen ermöglicht, insbesondere eine effiziente Analyse und Auswertung des gesamten Produktionsprozesses eines Produktes der daran beteiligten Einrichtungen ermöglicht.

### Erfindungsgemäße Lösung

Erfindungsgemäß wird diese Aufgabe mit einem Verfahren nach dem unabhängigen Anspruch gelöst. Vorteilhaft Ausgestaltungen der Erfindung sind in abhängigen Ansprüchen angegeben.

Bereitgestellt wird demnach ein Verfahren zum Bereitstellen von Prozessprotokollen zu Prozessen, die von einer Anzahl von physischen Einrichtungen ausgeführt werden, wobei
- zumindest ein Sensor zumindest einer physischen Einrichtung zugeordnet wird,
- der zumindest eine Sensor angepasst ist, physikalische Eigenschaften der Einrichtung als Messgrößen zu erfassen, und der zumindest eine Sensor die physikalischen Eigenschaften der Einrichtung als Messgrößen erfasst,
- die von dem zumindest einen Sensor erfassten Messgrößen dem zumindest einem Sensor und/oder der zumindest einen Einrichtung zugeordnet werden,
- den von dem zumindest einen Sensor erfassten Messgrößen zumindest ein Zeitstempel zugeordnet wird, der angibt, wann die jeweilige Messgröße von dem Sensor erfasst wurde,
- aus den von dem zumindest einen Sensor erfassten Messgrößen, der Zuordnung der erfassten Messgrößen zu dem zumindest einem Sensor und/oder zu der zumindest einen Einrichtung und dem den Messgrößen zugeordneten Zeitstempel das Prozessprotokoll erzeugt wird, wobei das Prozessprotokoll eine Anzahl von Datensätzen umfasst, wobei jeder Datensatz einen Prozessschritt des Prozesses beschreibt, und wobei jeder Datensatz des Prozessprotokolls zumindest umfasst:
   - ein erstes Attribut, in dem eine eindeutige Kennung des jeweiligen Prozesses gespeichert ist und mit dem der Prozessschritt dem Prozess zugeordnet wird;
   - ein zweites Attribut, in dem eine Kennung des Prozessschrittes gespeichert ist; und
   - ein drittes Attribut, in dem eine Reihenfolge der Prozessschritte innerhalb eines Prozesses gespeichert ist,
- das erzeugte Prozessprotokoll in einer Speichereinrichtung gespeichert wird,
- die von dem zumindest einen Sensor erfassten Messgrößen über ein Kommunikationsnetzwerk an die Speichereinrichtung übertragen werden,
- die an die Speichereinrichtung übertragenen Messgrößen als Rohdaten in der Speichereinrichtung gespeichert werden, wobei die Rohdaten
   - in der Speichereinrichtung dem zumindest einem Sensor und/oder der zumindest einen Einrichtung zugeordnet werden, und
   - zusätzlich zu den Messgrößen für jede Messgröße den zumindest einen Zeitstempel enthalten,
- aus den in der Speichereinrichtung gespeicherten Rohdaten und der jeweiligen Zuordnung der Rohdaten zu dem zumindest einem Sensor und/oder zu der zumindest einen Einrichtung das Prozessprotokoll erzeugt wird,
- beim Erzeugen des Prozessprotokolls aus den als Rohdaten gespeicherten Messgrößen in Abhängigkeit von der Zuordnung der jeweiligen Messgröße zu dem zumindest einem Sensor und/oder zu der zumindest einen Einrichtung die Kennung des Prozessschrittes generiert werden,
- die Reihenfolge der Prozessschritte innerhalb eines Prozesses durch die den Messgrößen zugeordneten Zeitstempel festgelegt werden, wobei der jeweilige Zeitstempel dem dritten Attribut gespeichert wird,
- die übertragenen maschinenlesbaren Daten für eine Verarbeitung als Stream im Arbeitsspeicher gehalten werden,
- das Prozessprotokoll im Arbeitsspeicher erzeugt wird, und
- das Prozessprotokoll durch eine fortlaufende Ergänzung fortlaufend erzeugt wird, wobei nachdem eine Messgröße als Rohdatum in der Speichereinrichtung gespeichert wurde, das entsprechende Prozessprotokoll ergänzt wird.

Bei den physischen Einrichtungen handelt es sich um technische Einrichtung, etwa Maschinen oder technische Überwachungseinrichtungen.

Der zumindest eine Sensor kann die physikalischen Eigenschaften der Einrichtung zeitlich beabstandet, vorzugsweise zyklisch, als Messgrößen erfassen.

Der zumindest eine Sensor kann zeitlich beabstandet eine Anzahl von Messgrößen erfassen und die Anzahl von Messgrößen zusammen mit einem Zeitstempel je Messgröße gemeinsam an die Speichereinrichtung übertragen.

Die erfassten Messgrößen können in einem zeitlichen Abstand nach der Erfassung an die Speichereinrichtung übertragen werden.

Einer Anzahl von physischen Einrichtungen kann jeweils zumindest ein Sensor zugeordnet werden, wobei mit den den physischen Einrichtungen zugeordneten Sensoren ein Sensornetzwerk gebildet wird und wobei die einer physischen Einrichtung zugeordneten Sensoren einen Sensorknoten des Sensornetzwerkes bilden.

Die von den verschiedenen physischen Einrichtungen zugeordneten Sensoren erfassten und als Rohdaten in der Speichereinrichtung gespeicherten Messgrößen können beim Erzeugen des Prozessprotokolls als Prozessschritte einem vorbestimmten Prozess zugeordnet werden.

Vorteilhaft ist es, wenn die Sensorknoten des Sensornetzwerkes operativ miteinander gekoppelt sind, wobei durch die Koppelung der Sensorknoten das Kommunikationsnetzwerk gebildet wird, über das die von den Sensoren der Sensorknoten erfassten Messgrößen an die Speichereinrichtung übertragen werden.

Einige der Sensorknoten des Sensornetzwerkes können Messgrößen zumindest eines ersten Sensorknotens empfangen und die empfangenen Messgrößen an einen zweiten Sensorknoten übertragen.

Die die empfangenen Messgrößen repräsentierenden Daten können vor dem Übertragen an den zweiten Sensorknoten aufbereitet werden, insbesondere in ein für das gesamte Sensornetzwerk einheitliches Datenformat konvertiert werden.

Die an die Speichereinrichtung übertragenen Daten können vor dem Speichern in der Speichereinrichtung aufbereitet werden, insbesondere in ein einheitliches Datenformat konvertiert werden.

Beim Erzeugen des zumindest einen Datensatzes des Prozessprotokolls kann aus den vom Sensor erfassten Messgrößen und der Zuordnung der erfassten Messgrö-βen zum Sensor und/oder zu der Einrichtung die Kennung des Prozessschrittes generiert wird.

Vorteilhaft ist es, wenn für jeden Sensor und/oder jede Einrichtung die zu vorbestimmten Messgrößen oder Messgrößenintervallen gehörenden Kennungen der Prozessschritte in einer Konfigurationsdatei oder Konfigurationstabelle gespeichert sind, wobei zum Generieren der Kennung des Prozessschrittes diese mit Hilfe der Konfigurationsdatei oder Konfigurationstabelle ermittelt wird.

Vorteilhaft ist es, wenn zumindest einem Datensatz des Prozessprotokolls kontextbezogene Daten zugeordnet werden, wobei die kontextbezogenen Daten
- von dem zumindest einen Sensor, oder
- von der zumindest einen Einrichtung bereitgestellt werden, oder
beim Erzeugen des Prozessprotokolls erzeugt werden.

Das erzeugte und in der Speichereinrichtung gespeicherte Prozessprotokoll kann zur Analyse der Prozesse einem Process-Mining-System zur Verfügung gestellt werden.

Die vorliegende Erfindung ermöglicht es also in vorteilhafter Weise Daten zu Maschinen und/oder Objekten von einem oder mehreren Sensoren oder Leseeinrichtungen zu übertragen und zu transformieren, um Prozessprotokolle zu erstellen, mit denen sämtliche Prozesszusammenhänge, einschließlich Sensor- und Maschinendaten, in der Produktion visualisiert und analysiert werden können.

Der bisherige Stand der Technik ermöglicht hingegen lediglich eine Visualisierung von Prozessen, die vollständig in IT-Systemen / Informationssystemen ausgeführt werden. Externe, d.h. außerhalb der IT-Systeme / Informationssysteme ablaufende Prozesse oder Teilprozesse können damit nicht visualisiert oder gar analysiert werden.

Ein weiterer Vorteil der Erfindung besteht darin, dass Prozessprotokolle um kontextbezogene Daten von Maschinen und/oder Objekten in der Produktion angereichert werden können, was erheblich bessere Analysen der Prozessabläufe ermöglicht.

### Kurzbeschreibung der Figuren

Einzelheiten und Merkmale der Erfindung sowie konkrete Ausführungsformen der Erfindung ergeben sich aus der nachfolgenden Beschreibung in Verbindung mit der Zeichnung. Es zeigt:
- **Fig. 1**: ein Blockdiagramm zur Verdeutlichung eines ersten Aspektes der Erfindung, bei dem physische Einrichtungen, beispielsweise Maschinen, überwacht werden und entsprechende Prozessprotokolle erzeugt werden;
- **Fig. 2**: ein Blockdiagramm zur Verdeutlichung eines zweiten Aspektes der Erfindung, bei dem Produkte bzw. Objekte entlang einer Produktionsbzw. Verarbeitungslinie überwacht werden und entsprechende Prozessprotokolle erzeugt werden;
- **Fig. 3**: zeigt ein Blockdiagramm zur Verdeutlichung eines dritten Aspektes der Erfindung, bei dem sowohl physische Einrichtungen als auch Produkte bzw. Objekte entlang einer Produktions- bzw. Verarbeitungslinie überwacht werden und entsprechende Prozessprotokolle erzeugt werden.

### Detaillierte Beschreibung der Erfindung

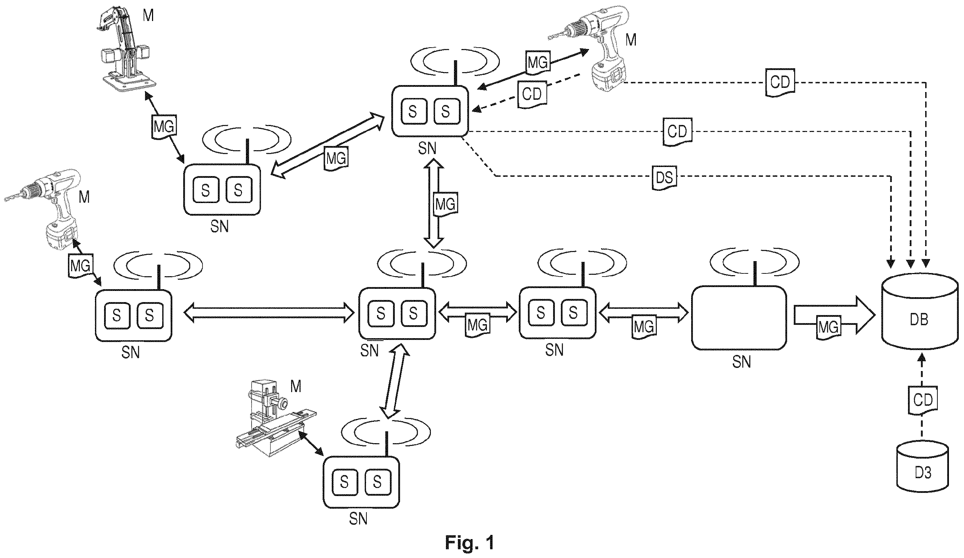

**Fig. 1** zeigt ein Blockdiagramm zur Verdeutlichung des Verfahrens gemäß einem ersten Aspekt der Erfindung.

In einer Produktionseinrichtung, etwa für die Herstellung von Produkten, sind mehrere physische Einrichtungen M für die Verarbeitung und die Bearbeitung von Produkten vorgesehen. Bei den physischen Einrichtungen kann es sich um Maschinen, beispielsweise Bohrmaschinen, Schleif- oder Fräsmaschinen, Montageroboter oder ähnliche Maschinen handeln. Neben verarbeitenden Maschinen können auch nichtverarbeitende Maschinen vorgesehen sein, etwa Prüfeinrichtungen, die beispielsweise Funktionstests durchführen oder sonstige Eigenschaften der Produkte überprüfen. Diese physischen Einrichtungen M werden nachfolgend auch als Maschinen M bezeichnet.

Einer Anzahl von Maschinen M, vorzugsweise allen Maschinen M, ist jeweils zumindest ein Sensor S zugeordnet, mit dem physikalische Eigenschaften der Maschinen M als Messgrößen MG erfasst werden können. Beispielsweise kann für eine Bohrmaschine oder eine elektrische Schraubeinrichtung das Drehmoment oder ein Drehmomentverlauf erfasst werden. In einem weiteren Beispiel kann für eine Maschine der Stromverbrauch erfasst werden, um beispielsweise das An- und Abschalten der Maschine zu detektieren.

Gemäß der Erfindung ist es möglich, jeder Maschine M entsprechende Sensoren zuzuordnen bzw. an der Maschine anzuordnen, um die jeweils gewünschte physikalische Eigenschaft als Messgröße zu erfassen.

Darüber hinaus ist es erfindungsgemäß auch möglich, an den Maschinen Sensoren S vorzusehen, mit denen nicht physikalische Eigenschaften der Maschine erfasst werden, sondern physikalische Eigenschaften des Produktes, das von der Maschine ver- bzw. bearbeitet wird. Beispielsweise kann an einem Lackierroboter M ein Sensor S vorgesehen sein, mit dem nach einem Lackiervorgang die Lackdicke der aufgetragenen Lackschicht gemessen wird. Bei einer Fräs- oder Schleifmaschine kann ein Temperatursensor vorgesehen sein, mit dem der Temperaturverlauf des Werkstückes während dem Schleif- bzw. Fräsvorgang erfasst wird.

Im einfachsten Fall ist jeder Maschine M ein einziger Sensor S zugeordnet. Wie erwähnt, können auch mehrere Sensoren S einer Maschine zugeordnet sein.

Ein einzelner einer Maschine zugeordneter Sensor S bzw. mehrere einer Maschine M zugeordnete Sensoren S können zusammen einen Sensorknoten SN bilden. Jeder Sensor S bzw. jeder Sensorknoten SN kann eine Verarbeitungseinrichtung, etwa einen Mikroprozessor aufweisen, mit der die erfassten Messgrößen MG verarbeitet bzw. aufbereitet werden können. Zudem kann jeder Sensor S bzw. jeder Sensorknoten SN über eine Speichereinrichtung verfügen, um die erfassten und gegebenenfalls aufbereiteten bzw. verarbeiteten Messgrößen MG zu speichern bzw. zwischenzuspeichern.

Die Verarbeitungseinrichtung der Sensoren bzw. Sensorknoten kann angepasst sein, einen Datensatz DS des Prozessprotokolls zu erzeugen. Das Erzeugen eines Datensatzes eines Prozessprotokolls wird nachfolgend näher beschrieben. Der von einem Sensor bzw. Sensorknoten erzeugte Datensatz DS kann an die Speichereinrichtung übertragen werden und dort direkt in das Prozessprotokoll eingefügt werden.

Das Erzeugen des Prozessprotokolls gemäß dem ersten in Fig. 1 gezeigten Aspekt der Erfindung wird nachfolgend anhand der in Fig. 1 gezeigten Bohrmaschine M erläutert.

Der Bohrmaschine M sind hier zwei Sensoren S zugeordnet, wobei beispielsweise ein erster Sensor die Drehzahl des Bohrers und ein zweiter Sensor das Drehmoment des Bohrers als Messgrößen MG erfassen. Die beiden Sensoren weisen hierfür entsprechende Messwertaufnehmer auf, die in geeigneter Weise mit der Bohrmaschine M gekoppelt sind bzw. in die Bohrmaschine M integriert sind.

Die von den Sensoren S bzw. von dem Sensorknoten SN erfassten Messgrößen MG werden an eine Speichereinrichtung DB übertragen, wo die Messgrößen als Rohdaten gespeichert werden. In der Speichereinrichtung DB werden zudem die Messgrößen MG aller anderen Sensoren S bzw. Sensorknoten SN als Rohdaten gespeichert.

Aus den in der Speichereinrichtung DB gespeicherten Rohdaten wird dann das Prozessprotokoll erzeugt. Je nachdem, von welchen Sensoren bzw. Sensorknoten Messgrößen MG in der Speichereinrichtung DB gespeichert werden, können auch mehrere unterschiedliche Prozessprotokolle erzeugt werden.

In einer Ausgestaltung der Erfindung werden das Prozessprotokoll bzw. die Prozessprotokolle zu einem späteren Zeitpunkt erzeugt, d.h. nachdem sämtliche für ein Prozessprotokoll relevanten Messgrößen MG in der Speichereinrichtung DB gespeichert wurden.

Gemäß der Erfindung wird das Prozessprotokoll bzw. können die Prozessprotokolle fortlaufend erzeugt werden, d.h. nachdem eine Messgröße MG als Rohdatum in der Speichereinrichtung DB gespeichert wurde, wird das entsprechende Prozessprotokoll ergänzt. Diese fortlaufende Ergänzung eines Prozessprotokolls hat den Vorteil, dass Abweichungen oder Fehler in einem Prozess bereits während der Ausführung des jeweiligen Prozesses erkannt werden können, wenn beispielsweise das Prozessprotokoll fortlaufend überwacht wird.

Das erzeugte Prozessprotokoll kann wiederum in der Speichereinrichtung DB gespeichert werden. Alternativ kann das erzeugte Prozessprotokoll auch in einer anderen Speichereinrichtung gespeichert werden.

Unabhängig davon, wo das erzeugte Prozessprotokoll gespeichert wird, wird dieses für die weitere Verarbeitung bzw. Auswertung einem Process Mining System bereitgestellt. Mit einem solchen Process Mining System können prozessübergreifend Auswertungen bereits durchgeführter Prozesse bzw. sich noch in Ausführung befindlicher Prozesse durchgeführt werden.

Bekannte Process Mining Systeme ermöglichen die Rekonstruktion und Visualisierung IT-basierter Prozesse (Prozesse die vollständig in einem IT-System ausgeführt werden) auf Basis der von diesen Prozessen in dem IT-System hinterlassenen digitalen Spuren. Zur Rekonstruktion der Prozesse aus diesen digitalen Spuren werden die in einer Speichereinrichtung zugrundeliegenden Rohdaten in Prozessprotokolle transformiert. Das Process Mining System ermöglicht hierbei eine Verbindung mit dieser Speichereinrichtung oder enthält diese Speichereinrichtung selbst. Das Process Mining System liest die Prozessprotokolle aus und gibt sie in Form der Prozessvisualisierung wieder. Die Visualisierung ermöglicht es Nutzern Prozessabläufe zu erkennen und zu analysieren, um beispielsweise Schwachstellen oder Fehler aufzudecken.

Die vorliegende Erfindung ermöglicht es nun, auch Prozesse, in denen Maschinen und Objekte (z.B. Produkte) involviert sind und die ganz oder teilweise außerhalb eines IT-Systems ausgeführt werden, zu visualisieren und zu analysieren. Hierfür können die bereits bekannten Process Mining Systeme verwendet werden, indem die hierfür benötigten Prozessprotokolle erfindungsgemäß erzeugt bzw. erstellt werden.

Beim Speichern der an die Speichereinrichtung DB übertragenen Messgrößen MG kann jeder Messgröße ein Zeitstempel oder ein Zeitintervall, bestehend aus zwei Zeitstempeln, zugeordnet werden. Die Zuordnung der Zeitstempel beim Speichern der Messgrößen MG in der Speichereinrichtung DB ist dann vorteilhaft, wenn die von dem jeweiligen Sensor S bzw. Sensorknoten SN erfassten Messgrößen unmittelbar nach deren Erfassung an die Speichereinrichtung DB übertragen werden. Das Übertragen entsprechender Zeitstempel von einem Sensor S bzw. von einem Sensorknoten SN an die Speichereinrichtung DB kann so vermieden werden, wodurch die zu übertragende Datenmenge gegebenenfalls erheblich reduziert werden kann, was insbesondere dann von Bedeutung ist, wenn beispielsweise in einer Produktionsstätte eine sehr große Anzahl von Sensoren bzw. Sensorknoten vorhanden ist, die gegebenenfalls in sehr kurzen zeitlichen Abständen Messgrößen MG an die Speichereinrichtung DB übertragen.

In einer alternativen Ausgestaltung kann es allerdings vorgesehen sein, dass ein Sensor S bzw. Sensorknoten SN zeitlich beabstandet mehrere Messgrößen erfasst und diese Messgrößen MG dann zu einem späteren Zeitpunkt an die Speichereinrichtung DB überträgt. In diesem Fall ist es vorteilhaft, wenn bereits durch den Sensor S bzw. durch den Sensorknoten SN der Zeitstempel der jeweiligen Messgröße MG zugeordnet wird.

Unabhängig davon, wo die Zuordnung des Zeitstempels der jeweiligen Messgröße MG vorgenommen wird, gibt der Zeitstempel in der Regel an, wann die entsprechende Messgröße MG erfasst wurde. Gemäß der alternativen Ausgestaltung werden dann die mehreren Messgrößen zusammen mit den jeweiligen Zeitstempeln an die Speichereinrichtung DB übertragen.

Ferner werden die in der Speichereinrichtung DB gespeicherten Rohdaten einem Sensor bzw. einem Sensorknoten oder der Maschine zugeordnet, damit das Prozessprotokoll korrekt erzeugt werden kann bzw. aus dem Prozessprotokoll die Prozesse korrekt rekonstruiert werden können. Diese Zuordnung kann in einer Ausgestaltung der Erfindung direkt durch die Sensoren bzw. durch den Sensorknoten erfolgen, wobei die Messgrößen MG zusammen mit einer Kennung des Sensors bzw. des Sensorknotens oder zusammen mit einer Kennung der jeweiligen Maschine an die Speichereinrichtung DB übertragen werden.

In einer alternativen Ausgestaltung der Erfindung kann diese Zuordnung auch durch die Speichereinrichtung vorgenommen werden, wobei der Speichereinrichtung selbstverständlich bekannt sein muss, von wem welche Messgrößen MG entgegengenommen werden. In der Speichereinrichtung DB werden die die Messgrö-βen repräsentierenden Rohdaten dann den jeweiligen Sensoren bzw. der jeweiligen Maschine zugeordnet.

Aus der Speichereinrichtung DB wird dann das Prozessprotokoll erzeugt und dem Process Mining System zur Verfügung gestellt.

Die Übertragung der von den Sensoren erfassten Messgrößen und gegebenenfalls die Zeitstempel und die Zuordnung der Messgrößen zu den Sensoren bzw. Maschinen kann auf unterschiedliche Weise erfolgen.

In einer Ausgestaltung kann jeder Sensor bzw. jeder Sensorknoten die Daten direkt an die Speichereinrichtung übertragen.

In einer alternativen Ausgestaltung der Erfindung können die den unterschiedlichen Maschinen zugeordneten Sensoren bzw. Sensorknoten ein sog. Sensornetzwerk bilden, wobei die Daten eines Sensors bzw. eines Sensorknotens über mehrere Sensoren bzw. über mehrere Sensorknoten hinweg zur Speichereinrichtung DB übertragen werden. Bei dem im Fig. 1 gezeigten Beispiel werden beispielsweise die von dem der Bohrmaschine zugeordneten Sensorknoten erfassten Messgrößen über drei weitere Sensorknoten zur Speichereinrichtung DB übertragen.

Zumindest die inneren Sensorknoten des Sensornetzwerks sind dabei ausgestaltet, Daten eines Sensorknotens entgegenzunehmen und die entgegengenommenen Daten an einen weiteren Sensorknoten weiterzuleiten. Vor dem Weiterleiten der entgegengenommenen Daten können diese von dem Sensorknoten gegebenenfalls aufbereitet werden. Beispielsweise kann ein Sensorknoten die entgegengenommenen Daten hinsichtlich ihrer Datenstruktur so aufbereiten, dass die entgegengenommenen Daten und die von dem Sensorknoten erfassten Messgrößen MG mit einer einheitlichen Datenstruktur an den nächsten Sensorknoten weitergegeben werden. Damit kann beispielsweise erreicht werden, dass sämtliche von den Sensoren bzw. von den Sensorknoten erfassten Messgrößen in einer einheitlichen Datenstruktur bei der Speichereinrichtung DB ankommen.

Die Kommunikation zwischen den einzelnen Sensorknoten in dem Sensornetzwerk bzw. zwischen den Sensorknoten und der Speichereinrichtung DB kann drahtgebunden oder drahtlos erfolgen. Eine Kombination aus drahtloser und drahtgebundener Kommunikation ist ebenfalls möglich.

Aus den in der Speichereinrichtung DB gespeicherten Rohdaten (Messgrößen, Zuordnung der Messgrößen zu den Sensoren bzw. Maschinen und Zeitstempeln) werden mehrere Datensätze erzeugt, die zusammen das Prozessprotokoll bilden. Jeder Datensatz des Prozessprotokolls weist zumindest drei Attribute auf, wobei in dem ersten Attribut eine eindeutige Kennung eines Prozesses gespeichert wird und mit dem ein Prozessschritt eindeutig einem Prozess zugeordnet wird, in einem zweiten Attribut eine Kennung des Prozessschrittes gespeichert wird und in dem dritten Attribut die Reihenfolge der Prozessschritte innerhalb eines Prozesses gespeichert wird. Jeder Datensatz repräsentiert also einen Prozessschritt eines Prozesses unter Angabe der Reihenfolge des Prozessschrittes innerhalb dieses Prozesses.

Die zu einer bestimmten Maschine M gehörenden Messgrößen MG können einen oder mehrere Prozesse repräsentieren. Es ist aber auch möglich, dass mehrere Maschinen in einen Prozess involviert sind, sodass die zu diesen mehreren Maschinen gehörenden Messgrößen einen oder mehrere Prozesse repräsentieren.

Beispielsweise können für die Bohrmaschine und die Schleifmaschine folgende Rohdaten in der Speichereinrichtung DB gespeichert sein:

| **Maschine** | **Sensor** | **Einheit** | **Messgröße** | **Zeitstempel** |
|---|---|---|---|---|
| Bohrer | Strom | A | 0,0 | 08:15:35 |
| Bohrer | Strom | A | 1,3 | 08:16:15 |
| Bohrer | max. Drehmoment | Nm | 0,4 | 08:17:22 |
| Bohrer | Strom | A | 0,0 | 08:17:55 |
| Schleifmaschine | Strom | A | 0,0 | 08:23:00 |
| Schleifmaschine | Strom | A | 1,8 | 08:24:00 |
| Schleifmaschine | Strom | A | 0,0 | 08:25:00 |
| ... | | | | |

Für den Fall, dass die Bohrmaschine und die Schleifmaschine jeweils einem anderen Prozess zugeordnet sind, weil etwa mit der Bohrmaschine und der Schleifmaschine Werkstücke bearbeitet werden, die für unterschiedliche Produkte vorgesehen sind, kann aus den Rohdaten beispielsweise folgendes Prozessprotokoll erzeugt werden.

| **Prozess ID (= erstes Attribut)** | **Prozessschritt (= zweite Attribut)** | **Zeitstempel (= drittes Attribut)** |
|---|---|---|
| 1 | Bohrer an | 08:16:15 |
| 1 | Bohrloch fertig | 08:17:22 |
| 1 | Bohrer aus | 08:17:55 |
| 2 | Schleifmaschine an | 08:24:00 |
| 2 | Schleifmaschine aus | 08:25:00 |
| ... | | |

Mittels des ersten Attributs (Prozess ID) werden die Prozessschritte jeweils einem anderen Prozess zugeordnet.

Für den Fall, dass die Bohrmaschine und die Schleifmaschine einem Prozess zugeordnet sind, etwa weil ein bestimmtes Werkstück zuerst gebohrt und anschließend geschliffen wird, kann aus den Rohdaten beispielsweise folgendes Prozessprotokoll erzeugt werden.

| **Prozess ID (= erstes Attribut)** | **Prozessschritt (= zweite Attribut)** | **Zeitstempel (= drittes Attribut)** |
|---|---|---|
| 1 | Bohrer an | 08:16:15 |
| 1 | Bohrloch fertig | 08:17:22 |
| 1 | Bohrer aus | 08:17:55 |
| 1 | Schleifmaschine an | 08:24:00 |
| 1 | Schleifmaschine aus | 08:25:00 |
| ... | | |

Die Prozessschritte der Bohrmaschine und der Schleifmaschine sind mittels der Prozess ID (= 1) demselben Prozess zugeordnet.

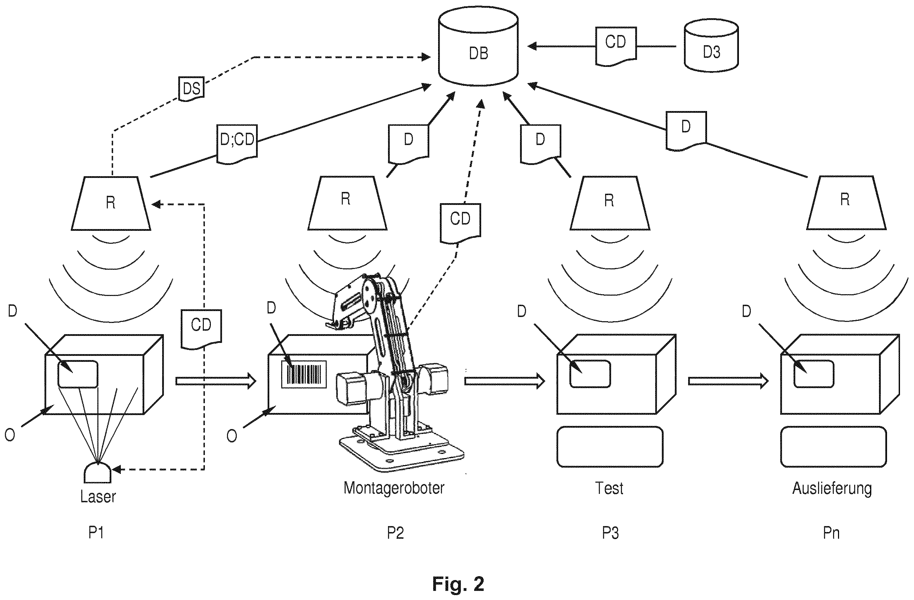

Die Prozess ID kann beispielsweise aus einer Kennung des herzustellenden Produktes ermittelt werden, sodass beispielsweise alle Werkstücke (oder Teilprodukte), die zu einem bestimmten Produkt gehören eine gemeinsame und eindeutige Kennung des Prozesses erhalten. Die Kennung des Produktes kann beispielsweise mit Hilfe maschinenlesbarer Daten ermittelt werden, die an dem Produkt / Werkstück angeordnet sind und die beispielsweise mittels eines Lesegeräts (z.B. an der jeweiligen Maschine M) ausgelesen werden können (wie beispielsweise mit Bezug auf Fig. 2 gezeigt). Diese Daten können der Speichereinrichtung als kontextbezogene Daten CD übermittelt werden.

Die kontextbezogenen Daten können von der Maschine M direkt an die Speichereinrichtung übertragen werden. Anhand des Übertragungszeitpunktes und dem Zeitstempel in den Rohdaten können die kontextbezogenen Daten mit den Rohdaten in Bezug gebracht werden. Alternativ können diese kontextbezogenen Daten CD auch zusammen mit Messgrößen übertragen, wobei hier der Bezug zueinander bereits durch die gemeinsame Übertragung gegeben ist.

Sollen allerdings nur Prozesse einzelner Maschinen betrachtet (z.B. ausgewertet) werden (wenn z.B. jeder Verarbeitungsprozess einer Maschine als eigenständiger Prozess betrachtet wird), dann kann die Kennung des Prozesses beispielsweise aus der Kennung der Maschine ermittelt werden.

Mittels spezieller Ereignisse können mehrere von einer Maschine ausgeführte Prozesse unterschieden werden. Ein solches Ereignis am Beispiel des oben genannten Bohrers kann dann vorliegen, wenn sich der Strom von 0,0 A auf einen Wert von größer als 0,0 A ändert. Diese Änderung des Stromes kann als Ereignis "Bohrer an" interpretiert werden, was gleichbedeutend damit sein kann, dass der Bohrer ein neues / anderes Werkstück bearbeitet und damit ein neuer Prozess gestartet wurde.

Selbstverständlich können auch alle zu einer Maschine erfassten Messgrößen als ein einziger (fortlaufender) Prozess betrachtet werden.

Die kontextbezogenen Daten können auch weitere Daten umfassen, etwa Information zur Person, die die jeweilige Maschine bedient, oder Informationen zur Bestellung, des Kunden, etc.

In einer Ausgestaltung der Erfindung können die kontextbezogenen Daten CD auch von einem externen System oder einem Drittsystem D3 bereitgestellt werden und bei Bedarf an die Speichereinrichtung DB übertragen werden oder von dem jeweiligen Datensatz des Prozessprotokolls referenziert werden.

Der Wert des zweiten Attributes (Prozessschritt) kann basierend auf den Messgrö-βen MG ermittelt werden. In dem vorstehenden Beispiel ist eine Änderung der Messgröße Strom für den Bohrer von 0,0A auf einen Wert größer als 0,0A gleichbedeutend mit "Bohrer an". Als Wert des zweiten Attributes kann dann in dem entsprechenden Datensatz des Prozessprotokolls "Bohrer an" gespeichert werden.

Vorteilhaft ist es aber, wenn zu bestimmten Messgrößen/Messgrößenintervallen-Sensor-Kombinationen die entsprechenden Kennungen der Prozessschritte (= Werte des zweiten Attributes) in einer Konfigurationsdatei oder Konfigurationstabelle gespeichert werden. Bei Erzeugen der Datensätze des Prozessprotokolls kann dann die Kennung aus der Konfigurationsdatei oder Konfigurationstabelle ermittelt werden.

Mit Hilfe eines Process Mining Systems kann dann basierend auf dem Prozessprotokoll beispielsweise für den Bohrer ermittelt werden, ob sich über die Zeit die Zeitspanne zwischen "Bohrer an" und "Max. Drehmoment" vergrößert, oder ob das maximale Drehmoment unterhalb eines vorbestimmten Wertes absinkt.

**Fig. 2** zeigt ein Blockdiagramm zur Verdeutlichung des Verfahrens gemäß einem zweiten Aspekt der Erfindung.

Bei dem in Fig. 2 gezeigten Blockdiagramm werden Objekte O (meist Werkstücke oder Produkte) entlang einer Produktions-/Verarbeitungslinie be- bzw. verarbeitet. Die Produktions-/Verarbeitungslinie umfasst bei dem in Fig. 2 gezeigten Beispiel einen Laser (damit kann z.B. die Größe und Lage des Objektes O abgetastet werden), einen Montageroboter (z.B. zum Anbringen von Bauteilen an das Objekt O), eine Testeinrichtung (z.B. zum Durchführen von Funktionstests) und eine Auslieferungsstation (z.B. zum Verpacken des fertigen Objektes O).

Jeder Station der Produktions-/Verarbeitungslinie ist eine Leseeinrichtung R zugeordnet, mit der Informationen zu dem jeweiligen Objekt O an der jeweiligen Station P1 bis Pn erfasst werden können. Hierzu sind jedem Objekt O maschinenlesbare Daten D zugeordnet, etwa in Form eines Barcodes / QR-Codes oder in Form einer mittels elektromagnetischer Wellen auslesebaren Speichereinrichtung (z.B. ein RFID-Tag). Die Leseeinrichtungen sind entsprechend angepasst, um diese Daten D auslesen zu können (z.B. Barcode-Leser oder als RFID-Leseeinrichtung).

Die Leseeinrichtungen können angepasst sein, einen Datensatz DS des Prozessprotokolls zu erzeugen. Der von einer Leseeinrichtung erzeugte Datensatz DS kann an die Speichereinrichtung übertragen werden und dort direkt in das Prozessprotokoll eingefügt werden.

Sobald ein Objekt O eine Station P1 bis Pn erreicht und/oder verlässt werden die maschinenlesebaren Daten D ausgelesen. Die ausgelesenen Daten werden dann von der Leseeinrichtung R an einer Speichereinrichtung DB übertragen, wo sie als Rohdaten gespeichert werden.

Wie bei dem Beispiel nach Fig. 1 werden auch hier die übertragenen Daten mit einem oder mehreren Zeitstempels versehen. Die Zuordnung der Zeitstempel kann von der Leseeinrichtung R oder beim Speichern der übertragenen Daten von der Speichereinrichtung DB vorgenommen werden.

Werden gemäß einer Variante der Erfindung die maschinenlesbaren Daten D nicht unmittelbar nach dem Auslesen an die Speichereinrichtung DB übertragen, ist es jedoch vorteilhaft, wenn die Zuordnung der Zeitstempel von der Leseeinrichtung R vorgenommen wird. So kann die Leseeinrichtung R beispielsweise das Erreichen und das Verlassen einer Station registrieren, die Daten D aber erst mit Verlassen des Objektes O an die Speichereinrichtung übertragen. In diesem Fall muss die Leseeinrichtung R jedenfalls den Zeitpunkt des Erreichens des Objektes O registrieren und zusammen mit den Daten D an die Speichereinrichtung DB übertragen.

Für eine Überwachung der Produktions-/Verarbeitungslinie in Echtzeit (oder annähernd in Echtzeit) ist es vorteilhaft, wenn jede Leseeinrichtung R die erfassten Daten D unmittelbar an die Speichereinrichtung DB übermittelt. Damit kann für ein Objekt O bereits während eines Prozesses (der entlang der Produktions-/Verarbeitungslinie abgewickelt wird) ermittelt werden, ob sich dieser Prozess noch innerhalb bestimmter Parameter befindet (z.B. innerhalb vorbestimmter Laufzeiten).

Aus den an die Speichereinrichtung DB übertragenen Daten bzw. aus den in der Speichereinrichtung gespeicherten Rohdaten wird das Prozessprotokoll erzeugt. Das Prozessprotokoll umfasst mindestens drei Attribute, die bereits mit Bezug auf Fig. 1 beschrieben wurden. Aus einer Produktkennung, die Bestandteil der maschinenlesbaren Daten sind und die mit der Leseeinrichtung R ausgelesen wird, kann beim Erzeugen des Prozessprotokolls die Prozesskennung erzeugt werden und in dem ersten Attribut des Prozessprotokolls gespeichert werden. Unter Verwendung von kontextbezogenen Daten CD kann für den jeweiligen Prozessschritt einen Kennung erzeugt werden und in dem zweiten Attribut des Prozessprotokolls gespeichert werden. Das dritte Attribut, in dem die Reihenfolge der Prozessschritte innerhalb eines Prozesses gespeichert wird, ergibt sich aus den jeweiligen Zeitstempeln.

Für das in Fig. 2 gezeigte Beispiel können beispielsweise folgende Rohdaten in der Speichereinrichtung DB gespeichert werden.

| **Produkt ID** | **Produkttyp** | **Produktionsschritt** | **Status** | **Zeitstempel** |
|---|---|---|---|---|
| 10815 | Chassis | Laser | OK | 08:15:35 |
| 10815 | Chassis | Montage | OK | 08:16:15 |
| 10815 | Chassis | Funktionstest | OK | 08:17:22 |
| 10815 | Chassis | Auslieferung | OK | 08:17:55 |
| 10816 | Fahrwerk | Laser | OK | 08:23:00 |
| 10816 | Fahrwerk | Montage | OK | 08:24:00 |
| 10816 | Fahrwerk | Funktionstest | nOK | 08:25:00 |
| ... | | | | |

Aus diesen Rohdaten kann dann beispielsweise das folgende Prozessprotokoll erzeugt werden.

| **Prozess ID (= erstes Attribut)** | **Prozessschritt (= zweite Attribut)** | **Zeitstempel (= drittes Attribut)** |
|---|---|---|
| 1 | Starte Produktion | 08:15:35 |
| 1 | Montage beendet | 08:16:15 |
| 1 | Test erfolgreich | 08:17:22 |
| 1 | Produkt versendet | 08:17:55 |
| 2 | Starte Produktion | 08:23:00 |
| 2 | Montage beendet | 08:24:00 |
| 2 | Test nicht erfolgreich | 08:25:00 |
| ... | | |

Mittels des ersten Attributs (Prozess ID) werden die Prozessschritte jeweils einem bestimmten Prozess zugeordnet.

Die kontextbezogenen Daten CD, aus denen die Werte für das zweite Attribut des Prozessprotokolls ermittelt werden, können beispielsweise von der jeweiligen Station P1 bis Pn bereitgestellt werden. Beispielsweise kann die Station P3, die einen Funktionstest durchführt, den Status (OK oder nOK) des Tests als Kontextdaten für das getestete Produkt bereitstellen.

Diese kontextbezogenen Daten CD können von der jeweiligen Station (vorzugsweise zusammen mit einem Zeitstempel) direkt an die Speichereinrichtung übertragen werden und basierend auf dem Zeitstempel dem jeweiligen Produktionsschritt zugeordnet werden. Alternativ können die kontextbezogenen Daten CD auch von der jeweiligen Station an die der Station zugeordneten Leseeinrichtung R übertragen werden, und von der Leseeinrichtung zusammen mit den ausgelesenen Daten D an die Speichereinrichtung übertragen werden.

Bei dem in Fig. 2 gezeigten Beispiel hat durchläuft das Objekt O (wenn keine Störungen oder dergleichen auftreten) vier Stationen, sodass der Verarbeitungsprozess für dieses Objekt in dem Prozessprotokoll zumindest vier Prozessschritte aufweist.

Dieser Prozess kann auch mehr Prozessschritte aufweisen, wenn beispielsweise das Ankommen des Objektes an der Station und das Verlassen der Station als Prozessschritte in dem Prozessprotokoll erzeugt werden. Damit ist es beispielsweise möglich die Verweildauer eines Objektes an einer Station zu ermitteln, um beispielsweise feststellen zu können, an welcher Station der Prozess verzögert wird.

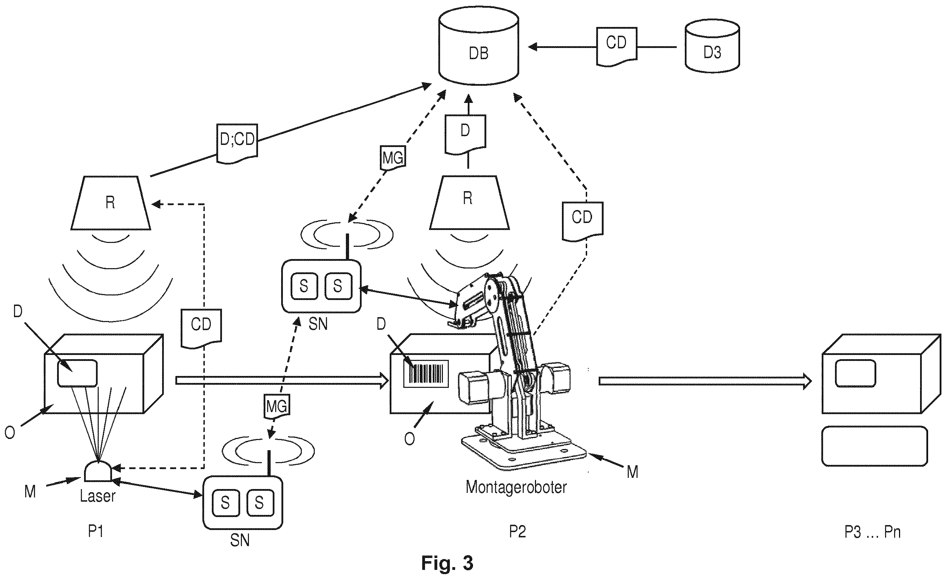

**Fig. 3** zeigt ein Blockdiagramm zur Verdeutlichung des Verfahrens gemäß einem dritten Aspekt der Erfindung.

Bei der in Fig. 3 gezeigten Variante des Verfahrens lassen sich die Vorteile der mit Bezug auf Fig. 1 beschriebenen Variante und die Vorteile der mit Bezug auf Fig. 2 beschriebenen Variante vereinen. Bei der Visualisierung und Analyse der Prozessabläufe können somit objekt- bzw. produktbezogene Daten, die von den Leseeinrichtungen R bereitgestellt werden, maschinenbezogene Daten, die von den Sensoren S bzw. von den Sensorknoten SN bereitgestellt werden, und kontextbezogene Daten berücksichtigt werden. Dadurch sind noch detailliertere Analysen möglich. Insbesondere können Zusammenhänge und Abhängigkeiten erkannt werden, die mit den beiden in Fig. 1 und Fig. 2 gezeigten Varianten alleine nicht erkannt werden können.

Nach der Variante gemäß Fig. 1 kann beispielsweise ermittelt werden, dass eine bestimmte Maschine häufig einen bestimmten Maschinenparameter überschreitet oder nicht erreicht (z.B. erreicht eine Bohrmaschine nach einer vorbestimmten Bohrdauer häufig das notwendige Drehmoment nicht).

Nach der Variante gemäß Fig. 2 kann beispielsweise ermittelt werden, dass bestimmte Produkte, in denen Bohrlöcher angebracht wurden, den Funktionstest an einer Teststation nicht bestehen, weil die Bohrlöcher bestimmte Kriterien nicht erfüllen (die Bohrlöcher sind z.B. nicht tief genug).

Durch die Kombination der beiden Varianten gemäß Fig. 1 und Fig. 2 kann nunmehr ein Zusammenhang zwischen dem Maschinenparameter und den fehlerhaften Bohrlöchern hergestellt werden. Beispielsweise kann erkannt werden, dass genau bei jenen Produkten, in denen Bohrlöcher nicht tief genug sind, die Bohrmaschine das notwendige Drehmoment nicht erreicht hat. Der Verarbeitungs- bzw. Produktionsprozess kann nun entsprechend justiert werden, z.B. kann die Bohrdauer, wenn Bohrlöcher in diesen Produkt zu bohren sind, verlängert werden, bis auch für diese Produkte die geforderten Bohrlochtiefen erreicht werden.

Bestimmte Zusammenhänge können also erst durch die Kombination der beiden Varianten gemäß Fig. 1 und Fig. 2 erkannt werden, sodass beispielsweise eine Fehler- oder Ursachensuche und damit gegebenenfalls einhergehende Stillstandzeiten oder Produktionsstopps erheblich reduziert werden können.

Bei der in Fig. 3 gezeigten Variante sind den Produkten bzw. Objekten O, die entlang einer Produktions-/Verarbeitungslinie ver- bzw. bearbeitet werden, maschinenlesbare Daten D zugeordnet. Die Ausgestaltung dieser maschinenlesbaren Daten D ist mit Bezug auf Fig. 2 beschrieben worden.

Den Stationen P1 bis Pn der Produktions-/Verarbeitungslinie sind Leseeinrichtungen zugeordnet, mit denen die maschinenlesbaren Daten D ausgelesen werden können, sobald ein Objekt O die jeweilige Station erreicht und/oder verlässt.

Den Maschinen M sind Sensoren S bzw. Sensorknoten SN zugeordnet, mit den bestimmte physikalische Eigenschaften der jeweiligen Maschine als Messgrößen MG erfasst werden können (etwa Temperatur, Drehmoment, etc.). Die Ausgestaltung der Sensoren S bzw. der Sensorknoten SN und die Bildung und Funktionsweise eines unter Verwendung der Sensorknoten SN gebildeten Sensornetzwerkes sind mit Bezug auf Fig. 1 beschrieben worden.

Die von den Leseeinrichtungen R erfassten maschinenlesbaren Daten D und die von den Sensoren S bzw. Sensorknoten SN erfassten Messgrößen MG werden an die Speichereinrichtung DB übertragen und dort als Rohdaten gespeichert. Aus diesen Rohdaten werden dann Prozessprotokolle erzeugt, die dann einem Process Mining System zur Verfügung gestellt werden. Das Erzeugen der Prozessprotokolle ist mit Bezug auf Fig. 1 und Fig. 1 beschrieben worden.

Zudem können sowohl die Leseeinrichtungen R als auch die Sensoren S bzw. Sensorknoten SN als auch die Maschinen selbst kontextbezogene Daten CD an die Speichereinrichtung DB übertragen, wie ebenfalls mit Bezug auf Fig. 1 und Fig. 2 beschrieben worden ist. Anhand dieser kontextbezogenen Daten CD kann die Zuordnung der von den Leseeinrichtungen R übertragenen Daten D zu den von den Sensoren S bzw. Sensorknoten SN übertragenen Daten MG vorgenommen werden.

Alternativ oder zusätzlich hierzu kann die Zuordnung auch über die Zeitstempel erfolgen, die zusammen mit den von den Leseeinrichtungen R übertragenen Daten D und den von den Sensoren S bzw. Sensorknoten SN übertragenen Daten MG übertragen werden.

Aufgrund dieser Zuordnung können sowohl die aus den von den Leseeinrichtungen R übertragenen Daten D resultierenden Prozessschritte als auch die aus den von den Sensoren S bzw. Sensorknoten SN übertragenen Daten MG resultierenden Prozessschritte in dem Prozessprotokoll dem richtigen Prozess zugeordnet werden. Das Erzeugen der Prozessschritte erfolgt hierbei, wie mit Bezug auf Fig. 1 und Fig. 2 beschrieben.

Nachfolgend werden Beispiele für Rohdaten, die für von einem Sensorknoten SN übertragenen Daten MG in der Speichereinrichtung DB gespeichert werden, und für Rohdaten, die für von einer Leseeinrichtungen R übertragenen Daten D in der Speichereinrichtung DB gespeichert werden, sowie ein daraus resultierendes Prozessprotokoll gezeigt.

| **Maschine** | **Sensor** | **Einheit** | **Messgröße** | **Zeitstempel** |
|---|---|---|---|---|
| Bohrer | Strom | A | 0,0 | 08:15:35 |
| Bohrer | Strom | A | 1,3 | 08:16:15 |
| Bohrer | max. Drehmoment | Nm | 0,4 | 08:17:22 |
| Bohrer | Strom | A | 0,0 | 08:17:55 |

### Rohdaten zu den Daten MG

| **Produkt ID** | **Produkttyp** | **Produktionsschritt** | **Status** | **Zeitstempel** |
|---|---|---|---|---|
| 10815 | Chassis | Laser | OK | 08:10:00 |
| 10815 | Chassis | Montage | OK | 08:14:00 |
| 10815 | Chassis | Montage | OK | 08:20:00 |
| 10815 | Chassis | Funktionstest | OK | 08:25:22 |
| 10815 | Chassis | Auslieferung | OK | 08:50:00 |

### Rohdaten zu den Daten D

| **Prozess ID (= erstes Attribut)** | **Prozessschritt (= zweite Attribut)** | **Zeitstempel (= drittes Attribut)** |
|---|---|---|
| 1 | Starte Produktion | 08:10:00 |
| 1 | Starte Montage | 08:14:00 |
| 1 | Bohrer an | 08:16:15 |
| 1 | Bohrloch fertig | 08:17:22 |
| 1 | Bohrer aus | 08:17:55 |
| 1 | Montage beendet | 08:20:00 |
| 1 | Test erfolgreich | 08:25:22 |
| 1 | Produkt versendet | 08:50:00 |

### Prozessprotokoll

Vorstehend wurden Ausführungsbeispiele der beschrieben, bei denen die Daten D, MG, CD an eine Speichereinrichtung DB übertragen werden und dort als Rohdaten gespeichert werden. Bei dieser Speichereinrichtung kann es sich um einen permanenten Speicher (z.B. Festplatte) oder um einen volatilen Speicher (z.B. Arbeitsspeicher) handeln.

Für eine Verarbeitung der übertragenen Daten als Stream ist es erfindungsgemäß vorgesehen diese im Arbeitsspeicher zu halten, wobei im Arbeitsspeicher auch das Prozessprotokoll erzeugt und dem Process Mining System bereitgestellt werden kann. Dies eignet sich insbesondere dann, wenn eine Echtzeit-Analyse von Prozessen gewünscht ist und das Prozessprotokoll nach der Analyse nicht mehr benötigt wird.

Für eine spätere Analyse der Prozessprotokolle kann es hingegen vorteilhaft sein, die übertragenen Daten und die daraus erzeugten Prozessprotokoll in einem permanenten Speicher zu speichern.

Zum Speichern und für die Organisation der Daten können Datenbankmanagementsystem, In-Memory-Datenbanken oder aber auch ein Filesystem verwendet werden.

## Patentansprüche

1. Verfahren zum Bereitstellen von Prozessprotokollen zu Prozessen, die von einer Anzahl von physischen Einrichtungen ausgeführt werden, wobei
- zumindest ein Sensor (S) zumindest einer physischen Einrichtung (M) zugeordnet wird,
- der zumindest eine Sensor (S) angepasst ist, physikalische Eigenschaften der Einrichtung (M) als Messgrößen zu erfassen, und der zumindest eine Sensor (S) die physikalischen Eigenschaften der Einrichtung (M) als Messgrößen (MG) erfasst,
- die von dem zumindest einen Sensor (S) erfassten Messgrößen (MG) dem zumindest einen Sensor (S) und/oder der zumindest einen Einrichtung (M) zugeordnet werden,
- den von dem zumindest einen Sensor (S) erfassten Messgrößen (MG) zumindest ein Zeitstempel zugeordnet wird, der angibt, wann die jeweilige Messgröße von dem Sensor (S) erfasst wurde,
- aus den von dem zumindest einen Sensor (S) erfassten Messgrößen (MG), der Zuordnung der erfassten Messgrößen zu dem zumindest einen Sensor (S) und/oder zu der zumindest einen Einrichtung (M) und dem den Messgrößen zugeordneten Zeitstempel das Prozessprotokoll erzeugt wird, wobei das Prozessprotokoll eine Anzahl von Datensätzen (DS) umfasst, wobei jeder Datensatz (DS) einen Prozessschritt des Prozesses beschreibt, und wobei jeder Datensatz des Prozessprotokolls zumindest umfasst:
- ein erstes Attribut, in dem eine eindeutige Kennung des jeweiligen Prozesses gespeichert ist und mit dem der Prozessschritt dem Prozess zugeordnet wird;
- ein zweites Attribut, in dem eine Kennung des Prozessschrittes gespeichert ist; und
- ein drittes Attribut, in dem eine Reihenfolge der Prozessschritte innerhalb eines Prozesses gespeichert ist,
- das erzeugte Prozessprotokoll in einer Speichereinrichtung (DB) gespeichert wird,
- die von dem zumindest einen Sensor (S) erfassten Messgrößen (MG) über ein Kommunikationsnetzwerk an die Speichereinrichtung (DB) übertragen werden,
- die an die Speichereinrichtung (DB) übertragenen Messgrößen (MG) als Rohdaten in der Speichereinrichtung gespeichert werden, wobei die Rohdaten
- in der Speichereinrichtung (DB) dem zumindest einen Sensor (S) und/oder der zumindest einen Einrichtung (M) zugeordnet werden, und
- zusätzlich zu den Messgrößen für jede Messgröße (MG) den zumindest einen Zeitstempel enthalten,
- aus den in der Speichereinrichtung (DB) gespeicherten Rohdaten und der jeweiligen Zuordnung der Rohdaten zu dem zumindest einen Sensor (S) und/oder zu der zumindest einen Einrichtung (M) das Prozessprotokoll erzeugt wird,
- beim Erzeugen des Prozessprotokolls aus den als Rohdaten gespeicherten Messgrößen in Abhängigkeit von der Zuordnung der jeweiligen Messgröße zu dem zumindest einen Sensor (S) und/oder zu der zumindest einen Einrichtung (M) die Kennung des Prozessschrittes generiert wird, und
- die Reihenfolge der Prozessschritte innerhalb eines Prozesses durch die den Messgrößen zugeordneten Zeitstempel festgelegt wird, wobei der jeweilige Zeitstempel in dem dritten Attribut gespeichert wird,
- die übertragenen maschinenlesbaren Daten (D) für eine Verarbeitung als Stream im Arbeitsspeicher gehalten werden,
- das Prozessprotokoll im Arbeitsspeicher erzeugt wird, und
- das Prozessprotokoll durch eine fortlaufende Ergänzung fortlaufend erzeugt wird, wobei nachdem eine Messgröße als Rohdatum in der Speichereinrichtung gespeichert wurde, das entsprechende Prozessprotokoll ergänzt wird.

2. Verfahren nach Anspruch 1, wobei der zumindest eine Sensor (S) die physikalischen Eigenschaften der Einrichtung (M) zeitlich beabstandet, vorzugsweise zyklisch, als Messgrößen erfasst.

3. Verfahren nach Anspruch 1, wobei der zumindest eine Sensor (S) zeitlich beabstandet eine Anzahl von Messgrößen erfasst und die Anzahl von Messgrö-βen zusammen mit einem Zeitstempel je Messgröße gemeinsam an die Speichereinrichtung (DB) überträgt.

4. Verfahren einem der beiden vorhergehenden Ansprüche, wobei erfassten Messgrößen in einem zeitlichen Abstand nach der Erfassung an die Speichereinrichtung (DB) übertragen werden.

5. Verfahren nach Anspruch 1, wobei einer Anzahl von physischen Einrichtungen (M) jeweils zumindest ein Sensor (S) zugeordnet wird, wobei mit den den physischen Einrichtungen (M) zugeordneten Sensoren (S) ein Sensornetzwerk gebildet wird und wobei die einer physischen Einrichtung (M) zugeordneten Sensoren (S) einen Sensorknoten (SN) des Sensornetzwerkes bilden.

6. Verfahren nach dem vorhergehenden Anspruch, wobei die von verschiedenen physischen Einrichtungen (M) zugeordneten Sensoren (S) erfassten und als Rohdaten in der Speichereinrichtung gespeicherten Messgrößen beim Erzeugen des Prozessprotokolls als Prozessschritte einem vorbestimmten Prozess zugeordnet werden.

7. Verfahren nach einem der beiden vorhergehenden Ansprüche, wobei die Sensorknoten (SN) des Sensornetzwerkes operativ miteinander gekoppelt sind, wobei durch die Koppelung der Sensorknoten (SN) das Kommunikationsnetzwerk gebildet wird, über das die von den Sensoren der Sensorknoten (SN) erfassten Messgrößen an die Speichereinrichtung (DB) übertragen werden.

8. Verfahren nach dem vorhergehenden Anspruch, wobei einige der Sensorknoten (SN) des Sensornetzwerkes Messgrößen zumindest eines ersten Sensorknotens empfangen und die empfangenen Messgrößen an einen zweiten Sensorknoten übertragen.

9. Verfahren nach dem vorhergehenden Anspruch, wobei die die empfangenen Messgrößen repräsentierenden Daten vor dem Übertragen an den zweiten Sensorknoten aufbereitet werden, insbesondere in ein für das gesamte Sensornetzwerk einheitliches Datenformat konvertiert werden.

10. Verfahren nach Anspruch 1, wobei die an die Speichereinrichtung (DB) übertragenen Daten vor dem Speichern in der Speichereinrichtung (DB) aufbereitet werden, insbesondere in ein einheitliches Datenformat konvertiert werden.

11. Verfahren nach Anspruch 1, wobei für jeden Sensor (S) und/oder jede Einrichtung (M) die zu vorbestimmten Messgrößen oder Messgrößenintervallen gehörenden Kennungen der Prozessschritte in einer Konfigurationsdatei oder Konfigurationstabelle gespeichert sind, wobei zum Generieren der Kennung des Prozessschrittes diese mit Hilfe der Konfigurationsdatei oder Konfigurationstabelle ermittelt wird.

12. Verfahren nach Anspruch 1, wobei zumindest einem Datensatz des Prozessprotokolls kontextbezogene Daten (CD) zugeordnet werden, wobei die kontextbezogenen Daten (CD)
- von dem zumindest einen Sensor (S), oder
- von der zumindest einen Einrichtung (M) bereitgestellt werden, oder
beim Erzeugen des Prozessprotokolls erzeugt werden.

13. Verfahren nach Anspruch 1, wobei das erzeugte und in der Speichereinrichtung (DB) gespeicherte Prozessprotokoll zur Analyse der Prozesse einem Process-Mining-System zur Verfügung gestellt wird.

## Claims

1. Method for providing process protocols for processes performed by a number of physical devices, wherein
- at least one sensor (S) is assigned to at least one physical device (M),
- the at least one sensor (S) is suitable for detecting physical properties of the device (M) as measured variables, and the at least one sensor (S) detects the physical properties of the device (M) as measured variables (MG),
- the measured variables (MG) detected by the at least one sensor (S) are associated with the at least one sensor (S) and/or with the at least one device (M),
- at least one time stamp is assigned to the measured variables (MG) detected by the at least one sensor (S), which time stamp indicates when the relevant measured variable was detected by the sensor (S),
- the process protocol is generated from the measured variables (MG) detected by the at least one sensor (S), the association of the detected measured variables with the at least one sensor (S) and/or with the at least one device (M), and the time stamp assigned to the measured variables, wherein the process protocol comprises a number of data sets (DS), wherein each data set (DS) describes a process step of the process, and wherein each data set of the process protocol at least comprises:
- a first attribute, in which a unique identifier of the relevant process is stored and by means of which the process step is associated with the process;
- a second attribute, in which an identifier of the process step is stored; and
- a third attribute, in which an order of the process steps within a process is stored,
- the generated process protocol is stored in a storage device (DB),
- the measured variables (MG) detected by the at least one sensor (S) are transmitted to the storage device (DB) via a communication network,
- the measured variables (MG) transmitted to the storage device (DB) are stored as raw data in the storage device, wherein the raw data
- are associated with the at least one sensor (S) and/or the at least one device (M) in the storage device (DB) and
- contain the at least one time stamp in addition to the measured variables for each measured variable (MG),
- the process protocol is generated from the raw data stored in the storage device (DB) and the relevant association of the raw data with the at least one sensor (S) and/or with the at least one device (M),
- when generating the process protocol from the measured variables stored as raw data, the identifier of the process step is generated as a function of the association of the relevant measured variable with the at least one sensor (S) and/or with the at least one device (M), and
- the order of the process steps within a process is determined by the time stamps assigned to the measured variables, wherein the relevant time stamp is stored in the third attribute,
- the transmitted machine-readable data (D) for a processing process are held in the memory as a stream,
- the process protocol is generated in the memory, and
- the process protocol is continuously generated by a continuous addition, wherein after a measured variable has been stored as a piece of raw data in the storage device, the corresponding process protocol is supplemented.

2. Method according to claim 1, wherein the at least one sensor (S) detects the physical properties of the device (M) in a temporally spaced manner, preferably cyclically, as measured variables.

3. Method according to claim 1, wherein the at least one sensor (S) detects a number of measured variables in a temporally spaced manner and jointly transmits the number of measured variables, together with a time stamp per measured variable, to the storage device (DB).

4. Method of one of the two preceding claims, wherein detected measured variables are transmitted to the storage device (DB) at a time interval after the detection.

5. Method according to claim 1, wherein at least one sensor (S) is assigned to a number of physical devices (M) in each case, wherein a sensor network is formed with the sensors (S) assigned to the physical devices (M), and the sensors (S) assigned to a physical device (M) form a sensor node (SN) of the sensor network.

6. Method according to the preceding claim, wherein the measured variables, which are detected by sensors (S) assigned to different physical devices (M) and are stored as raw data in the storage device, are associated with a predetermined process as process steps during the generation of the process protocol.

7. Method according to either of the two preceding claims, wherein the sensor nodes (SN) of the sensor network are operatively coupled to one another, the communication network being formed by the coupling of the sensor nodes (SN), via which network the measured variables detected by the sensors of the sensor nodes (SN) are transmitted to the storage device (DB).

8. Method according to the preceding claim, wherein some of the sensor nodes (SN) of the sensor network receive measured variables of at least one first sensor node and transmit the received measured variables to a second sensor node.

9. Method according to the preceding claim, wherein the data representing the received measured variables are processed before the transmission to the second sensor node, in particular converted into a data format that is uniform for the entire sensor network.

10. Method according to claim 1, wherein the data transmitted to the storage device (DB) are processed before the storage in the storage device (DB), in particular converted into a uniform data format.

11. Method according to claim 1, wherein for each sensor (S) and/or each device (M), the identifiers of the process steps belonging to predetermined measured variables or measured variable intervals are stored in a configuration file or configuration table, wherein, in order to generate the identifier of the process step, said identifier is determined using the configuration file or configuration table.

12. The method according to claim 1, wherein context related data (CD) are assigned to at least one data set of the process protocol, wherein the context related data (CD) are provided by
- the at least one sensor (S), or
- the at least one device (M),
or
are generated during the generation of the process protocol.

13. Method according to claim 1, wherein the generated process protocol stored in the storage device (DB) for analyzing the processes is provided to a process mining system.

## Revendications

1. Procédé permettant de mettre à disposition des protocoles de processus pour des processus exécutés par un certain nombre de dispositifs physiques, dans lequel
- au moins un capteur (S) est associé à au moins un dispositif (M) physique,
- l'au moins un capteur (S) est adapté pour détecter des propriétés physiques du dispositif (M) en tant que grandeurs de mesure et l'au moins un capteur (S) détecte les propriétés physiques du dispositif (M) en tant que grandeurs de mesure (MG),
- les grandeurs de mesure (MG) détectées par l'au moins un capteur (S) sont associées à l'au moins un capteur (S) et/ou à l'au moins un dispositif (M),
- au moins une estampille temporelle qui indique quand la grandeur de mesure respective a été détectée par le capteur (S) est associée aux grandeurs de mesure (MG) détectées par l'au moins un capteur (S),
- le protocole de processus est produit à partir des grandeurs de mesure (MG) détectées par l'au moins un capteur (S), de l'association des grandeurs de mesure détectées à l'au moins un capteur (S) et/ou à l'au moins un dispositif (M) et de l'estampille temporelle associée aux grandeurs de mesure, dans lequel le protocole de processus comprend un certain nombre de jeux de données (DS), dans lequel chaque jeu de données (DS) décrit une étape de processus du processus et dans lequel chaque jeu de données du protocole de processus comprend au moins :
- un premier attribut dans lequel est stocké un identifiant unique du processus respectif et avec lequel l'étape de processus est associée au processus ;
- un deuxième attribut dans lequel est stocké un identifiant de l'étape de processus ; et
- un troisième attribut dans lequel est stocké un ordre des étapes de processus dans un processus,
- le protocole de processus produit est stocké dans un dispositif de stockage (DB),
- les grandeurs de mesure (MG) détectées par l'au moins un capteur (S) sont transmises au dispositif de stockage (DB) par l'intermédiaire d'un réseau de communication,
- les grandeurs de mesure (MG) transmises au dispositif de stockage (DB) sont stockées sous forme de données brutes dans le dispositif de stockage, dans lequel les données brutes
- sont associées à l'au moins un capteur (S) et/ou à l'au moins un dispositif (M) dans le dispositif de stockage (DB), et
- contiennent, en plus des grandeurs de mesure, l'au moins une estampille temporelle pour chaque grandeur de mesure (MG),
- à partir des données brutes stockées dans le dispositif de stockage (DB) et de l'association respective des données brutes à l'au moins un capteur (S) et/ou à l'au moins un dispositif (M), le protocole de processus est produit,
- lors de la production du protocole de processus à partir des grandeurs de mesure stockées sous forme de données brutes en fonction de l'association de la grandeur de mesure respective à l'au moins un capteur (S) et/ou à l'au moins un dispositif (M), l'identifiant de l'étape de processus est généré, et
- l'ordre des étapes de processus dans un processus est déterminé par l'estampille temporelle associée aux grandeurs de mesure, dans lequel l'estampille temporelle respective est stockée dans le troisième attribut,
- les données lisibles par machine (D) transmises sont conservées en tant que flux dans la mémoire vive pour un traitement,
- le protocole de processus est produit dans la mémoire vive, et
- le protocole de processus est produit en continu par un complément continu, dans lequel le protocole de processus correspondant est complété après qu'une grandeur de mesure a été stockée sous forme de donnée brute dans le dispositif de stockage.

2. Procédé selon la revendication 1, dans lequel l'au moins un capteur (S) détecte les propriétés physiques du dispositif (M) en tant que grandeurs de mesure espacées dans le temps, de préférence de manière cyclique.

3. Procédé selon la revendication 1, dans lequel l'au moins un capteur (S) détecte un certain nombre de grandeurs de mesure espacées dans le temps et transmet le nombre de grandeurs de mesure conjointement avec une estampille temporelle par grandeur de mesure au dispositif de stockage (DB).

4. Procédé selon l'une des deux revendications précédentes, dans lequel des grandeurs de mesure détectées sont transmises au dispositif de stockage (DB) à un intervalle de temps après la détection.

5. Procédé selon la revendication 1, dans lequel respectivement au moins un capteur (S) est associé à un certain nombre de dispositifs (M) physiques, dans lequel un réseau de capteurs est formé avec les capteurs (S) associés aux dispositifs (M) physiques et dans lequel les capteurs (S) associés à un dispositif (M) physique forment un noeud capteur (SN) du réseau de capteurs.

6. Procédé selon la revendication précédente, dans lequel les grandeurs de mesure détectées par des capteurs (S) associés à différents dispositifs (M) physiques et stockées sous forme de données brutes dans le dispositif de stockage sont associées à un processus prédéterminé en tant qu'étapes de processus lors de la production du protocole de processus.

7. Procédé selon l'une des deux revendications précédentes, dans lequel les noeuds capteurs (SN) du réseau de capteurs sont couplés de manière opérationnelle les uns aux autres, dans lequel le réseau de communication est formé par le couplage des noeuds capteurs (SN), par l'intermédiaire duquel réseau de communication les grandeurs de mesure détectées par les capteurs des noeuds capteurs (SN) sont transmises au dispositif de stockage (DB).

8. Procédé selon la revendication précédente, dans lequel certains des noeuds capteurs (SN) du réseau de capteurs reçoivent des grandeurs de mesure d'au moins un premier noeud capteur et transmettent les grandeurs de mesure reçues à un second noeud capteur.

9. Procédé selon la revendication précédente, dans lequel les données représentant les grandeurs de mesure reçues sont traitées avant la transmission au second noeud capteur, en particulier sont converties en un format de données uniforme pour l'ensemble du réseau de capteurs.

10. Procédé selon la revendication 1, dans lequel les données transmises au dispositif de stockage (DB) sont traitées avant d'être stockées dans le dispositif de stockage (DB), en particulier sont converties en un format de données uniforme.

11. Procédé selon la revendication 1, dans lequel, pour chaque capteur (S) et/ou chaque dispositif (M), les identifiants des étapes de processus appartenant à des grandeurs de mesure ou des intervalles de grandeurs de mesure prédéterminés sont stockés dans un fichier de configuration ou un tableau de configuration, dans lequel, pour la génération de l'identifiant de l'étape de processus, celui-ci est défini à l'aide du fichier de configuration ou du tableau de configuration.

12. Procédé selon la revendication 1, dans lequel des données contextuelles (CD) sont associées à au moins un jeu de données du protocole de processus, dans lequel les données contextuelles (CD) sont mises à disposition
- par l'au moins un capteur (S), ou
- par l'au moins un dispositif (M),
ou
sont produites lors de la production du protocole de processus.

13. Procédé selon la revendication 1, dans lequel le protocole de processus produit et stocké dans le dispositif de stockage (DB) est fourni à un système d'exploration de processus pour l'analyse des processus.
